# EUROPÄISCHE PATENTSCHRIFT

(11) **EP 1 456 628 B1**
(45) Veröffentlichungstag und Bekanntmachung des Hinweises auf die Patenterteilung: **01.08.2007**
(21) Anmeldenummer: 02791636.0
(22) Anmeldetag: 17.12.2002
(51) Int. Cl.: G01N 21/86, B41F 33/00

(54) **VORRICHTUNG ZUR KONTROLLE VON MATERIAL**
DEVICE FOR CONTROLLING MATERIAL
DISPOSITIF DE CONTROLE DE MATIERE

(30) Priorität: 18.12.2001 DE 10162340; 18.04.2002 DE 10217403
(43) Veröffentlichungstag der Anmeldung: 15.09.2004
(60) Teilanmeldung: 07006113.0
(73) Patentinhaber: KBA-GIORI S.A., 1002 Lausanne (CH)
(72) Erfinder: SCHAEDE, Johannes, Georg, 97074 Würzburg (DE)
(74) Vertreter: Ganguillet, Cyril
(86) Internationale Anmeldenummer: PCT/DE2002/004609
(87) Internationale Veröffentlichungsnummer: WO 2003/052394

(56) Entgegenhaltungen:
- CH-A- 466 330
- DE-A- 4 331 965
- US-A- 4 233 663
- US-A- 4 259 591
- US-A- 4 407 197

## Beschreibung

Die Erfindung betrifft eine Vorrichtung zur Kontrolle von Material gemäß dem Oberbegriff des Anspruches 1.

Aus der DE 29 44 322 A1 und der US 30 28 502 A sind derartige Vorrichtungen bekannt.

Bei der in der US 30 28 502 A beschriebenen Vorrichtung wird das zu kontrollierende Material auf einer transparenten Trommel aufgespannt und kann durch entsprechende Rotation der Trommel an einer Sensoreinrichtung vorbeigeführt werden. Die Sensoreinrichtung ist dabei innerhalb der Trommel angeordnet und kann mittels eines verfahrbaren Schlittens in Richtung der Längsachse der Trommel verfahren werden. Außerhalb der Trommel ist der Sensoreinrichtung gegenüber liegend eine Beleuchtungseinrichtung angeordnet, die synchron zur Verstellung der Sensoreinrichtung verfahrbar ist. Durch Betrieb der Beleuchtungseinrichtung kann das auf dem Material aufgedruckte Druckbild ausgeleuchtet werden, wobei aufgrund der transparenten Eigenschaften der Trommel die innerhalb der Trommel angeordnete Sensoreinrichtung ein entsprechend dem Druckbild veränderliches Eingangssignal erhält.

Bei der in der DE 29 44 322 A1 beschriebenen Vorrichtung sind innerhalb einer lichtdurchlässigen Hohlwalze lichtoptische Sensoren angeordnet. Außerhalb der Hohlwalze sind den Lichtsensoren gegenüberliegend Lichtquellen oder eine sich über die gesamte Länge der Walze erstreckende Lichtquelle vorgesehen. Durch Beleuchtung des auf der Hohlwalze aufgespannten Druckerzeugnisses können in Abhängigkeit der aufgedruckten Farbdichte unterschiedliche Helligkeitswerte von den Lichtsensoren detektiert werden.

Aus der WO 01185586 A1 ist eine Vorrichtung zum Transport von bogenförmigem Material, insbesondere Wertnoten, bekannt, welches mittels Bogengreifersystemen fortlaufend ergriffen und auf Führungselementen, die ausserhalb des Zylindermantels angeordnet sind, geführt wird. . Damit das von einer Lichtquelle abgegebene Licht von außerhalb der Trommel unter Durchscheinung des Druckerzeugnisses zu einer innerhalb der Trommel angeordneten Sensoreinrichtung gelangen kann, weist die undurchsichtige Trommel entsprechend angeordnete Ausschnitte auf, so dass im Ergebnis nicht die gesamte Oberfläche kontrollierbar ist.

Die DE 43 31 965 A1 zeigt eine Vorrichtung zur Inspektion von Röntgenbildvorlagen, wobei die Lichtquelle innerhalb einer transparenten Trommel liegt.

Durch die US 42 59 591 A ist eine Vorrichtung zur Kontrolle von bogenförmigem Material auf einer Glastrommel bekannt, wobei innerhalb der Glastrommel eine Lichtquelle angeordnet ist.

Die US 42 33 663 A beschreibt einen Scanner zur Abschätzung der Farbmenge eines Druckes. Dabei ist eine Lichtquelle innerhalb und ein Sensor außerhalb einer transparenten, den Originaldruck tragenden Trommel angeordnet

Die CH 466 330 offenbart eine Vorrichtung zur Kontrolle der Farbfilmstärke in einem Farbwerk für Druckmaschinen mittels einer Walze aus Silikonglas.

Der Erfindung liegt die Aufgabe zugrunde, eine Vorrichtung zur Kontrolle von Material zu schaffen.

Die Aufgabe wird erfindungsgemäß durch die Merkmale des Anspruches 1 gelöst.

Ein mit der Erfindung erzielbarer Vorteil besteht insbesondere darin, dass die außerhalb der aus transparentem Material gefertigten Trommel angeordnete Sensoreinrichtung einer weit geringeren Temperaturbelastung ausgesetzt ist. Denn aufgrund der Anordnung der Sensoreinrichtung außerhalb der Trommel ist eine ausreichende Kühlung der Sensoreinrichtung ohne weiteres möglich.

Ein Ausführungsbeispiel der Erfindung ist in den Zeichnungen dargestellt und wird im folgenden näher beschrieben.

Es zeigen:
- Fig. 1: eine Vorrichtung im Querschnitt;
- Fig. 2: die Vorrichtung gemäß Fig. 1 im Längsschnitt;
- Fig. 3: die Vorrichtung gemäß Fig. 1 bei Anordnung an einem Gegendruckzylinder in einer Druckmaschine.

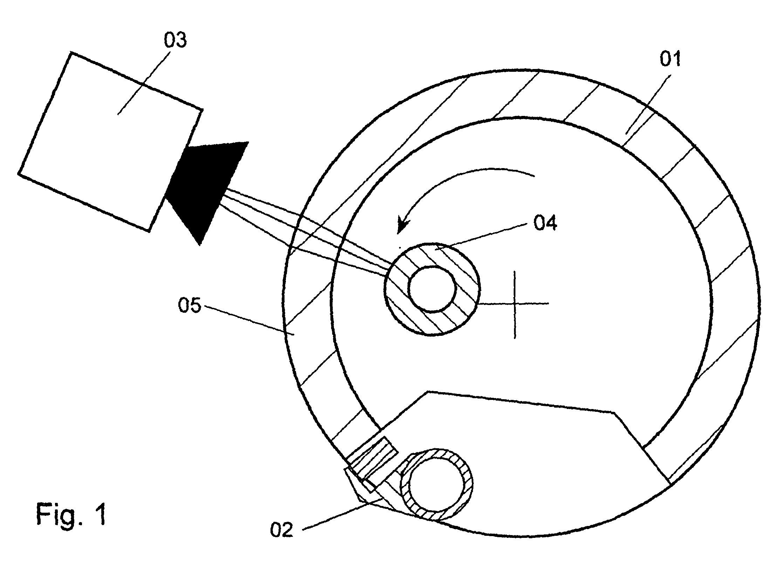

Die in Fig. 1 dargestellte Vorrichtung besteht im Wesentlichen aus einer transparenten Trommel 01 mit einer Halteeinrichtung 02, z. B. einem Greifer 02 und einer Sensoreinrichtung 03, beispielsweise einer CCD-Kamera 03, die außerhalb der Trommel 01 einer innerhalb der Trommel 01 angeordneten Beleuchtungseinrichtung 04 gegenüberliegend angeordnet ist.

Zur Kontrolle eines Materials 05, insbesondere zur Kontrolle von mit Wertnoten bedruckten Bogen, wird das Material 05 derart am Greifer 02 fixiert, dass durch rotatorischen Antrieb der Trommel 01 weitergefördert werden kann. Dabei umschlingt das Material 05 die Trommel 01 und liegt annähernd mit seiner gesamten Fläche auf der transparenten Trommel 01 auf.

Durch Einschalten der Beleuchtungseinrichtung 04 wird die transparente Trommel 01 und das darauf anliegende Material 05 von den Lichtstrahlen durchstrahlt, die anschließend ins Objektiv der Sensoreinrichtung 03 fallen. Je nach Druckbild auf dem Material 05 ändert sich dabei das von der Sensoreinrichtung 03 detektierte Eingangssignal, so dass durch eine entsprechend geeignete Auswerteeinheit das Druckbild auf dem Material 05 durch Auswertung der Ausgangssignale der Sensoreinrichtung 03 kontrolliert werden kann.

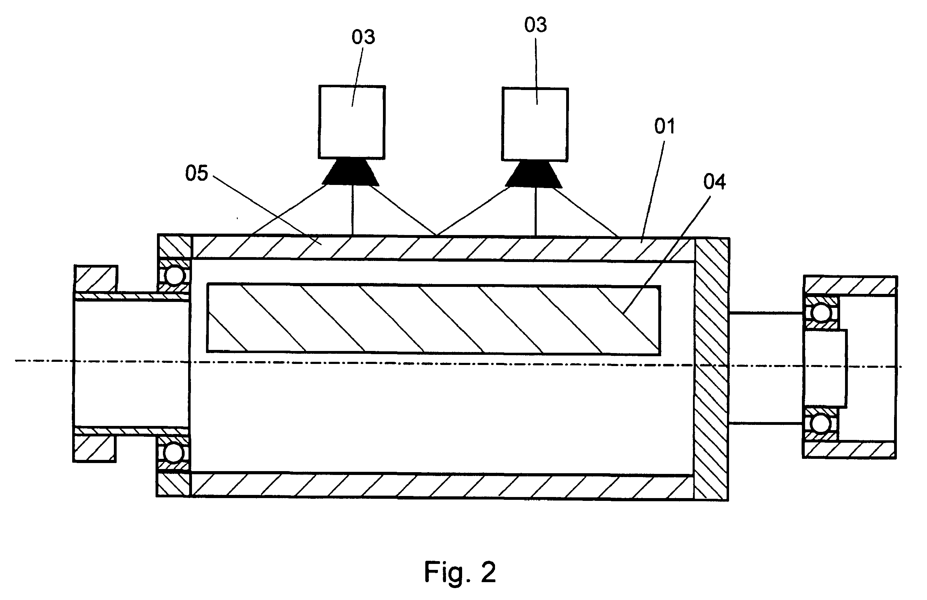

In Fig. 2 ist die Vorrichtung mit der Trommel 01, der Sensoreinrichtung 03, der Beleuchtungseinrichtung 04 und dem zu kontrollierenden Material 05 im Längsschnitt dargestellt. Man erkennt, dass die Trommel 01 an der einen Stirnseite geschlossen an der anderen offen ausgebildet ist, so dass in einfacher Weise eine ausreichende mechanische Stabilität der Trommel 01 gewährleistet werden kann, und außerdem die Beleuchtungseinrichtung 04 auf einfache Art in die Trommel 01 eingebracht und fixiert werden kann. Aufgrund der Anordnung der Sensoreinrichtung 03 außerhalb der Trommel 01 können die Sensoreinrichtungen 03, die bei dem dargestellten Ausführungsbeispiel von zwei nebeneinander angeordneten CCD-Kameras 09 gebildet ist, in einfacher Weise gekühlt werden.

Die Beleuchtungseinrichtung 04, die beispielsweise in der Art einer Leuchtröhre 04 ausgebildet sein kann, erstreckt sich im Wesentlichen über die gesamte Länge der Trommel 01, so dass das auf der Trommel 01 anliegende Material 05 in allen Bereichen ausgeleuchtet werden kann. Die Objektive der CCD-Kameras 03 sind dabei derart ausgebildet, dass jeweils die Hälfte der Länge der Trommel 01 erfasst wird.

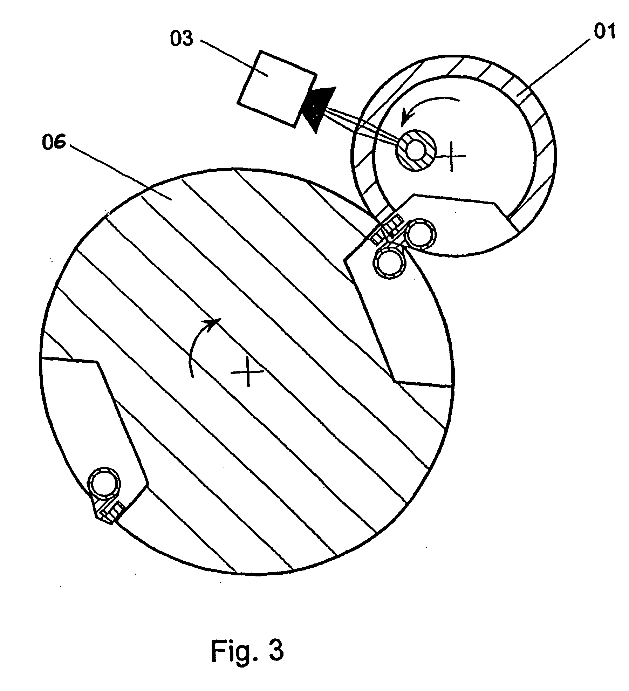

Fig. 3 stellt die Vorrichtung mit der Trommel 01 und der Sensoreinrichtung 03 bei Anordnung an einem Gegendruckzylinder 06 in einer Wertpapierdruckmaschine schematisch dar. Durch entsprechende Ausbildung der Greifer 02 an der Trommel 01 und dem Gegendruckzylinder 06 können die in der Druckmaschine bedruckten Wertnoten fortlaufend vom Gegendruckzylinder 06 auf die Trommel 01 übertragen und dort mittels der Sensoreinrichtung 03 kontrolliert werden.

### Bezugszeichenliste

- 01: Trommel, transparente
- 02: Halteeinrichtung, Greifer
- 03: Sensoreinrichtung, CCD-Kamara
- 04: Beleuchtungseinrichtung, Leuchtröhre
- 05: Material, zu kontrollierende
- 06: Gegendruckzylinder

## Patentansprüche

1. Vorrichtung zur Kontrolle von bogenartigem Material (05), mit einer Sensoreinrichtung (03) und einer Beleuchtungseinrichtung (04), wobei das zu kontrollierende bogenartige Material (05) auf einer transparenten Trommel (01) geführt ist, wobei die Beleuchtungseinrichtung (04) auf einer Seite der Trommel (01) und die Sensoreinrichtung (03) auf der anderen Seite der Trommel (01) angeordnet ist, wobei das Material (05) ein zu kontrollierendes Druckbild aufweist, wobei die Trommel (01) eine Halteeinrichtung (02) für das zu kontrollierende bogenartige Material (05) aufweist, **dadurch gekennzeichnet, dass** die Trommel (01) aus transparentem Material besteht und eine Aussparung für die Halteeinrichtung (02) aufweist, wobei diese Halteeinrichtung (02) fortlaufend das Material (05) von einem Gegendruckzylinder (06) einer Druckmaschine übernimmt und auf die Trommel (01) überträgt.

2. Vorrichtung nach Anspruch 1, **dadurch gekennzeichnet, dass** die Beleuchtungseinrichtung (04) innerhalb der Peripherie der Trommel (01) und die zugehörige Sensoreinrichtung (03) ausserhalb der Peripherie der Trommel (01) angeordnet ist.

3. Vorrichtung nach einem der vorhergehenden Ansprüche, **dadurch gekennzeichnet, dass** die Beleuchtungseinrichtung (04) und die zugehörige Sensoreinrichtung (03) ortsfest angeordnet sind.

4. Vorrichtung nach einem der vorhergehenden Ansprüche, **dadurch gekennzeichnet, dass** das Material (05) annähernd mit seiner gesamten Fläche auf der transparenten Trommel (01) aufliegt.

5. Vorrichtung nach einem der vorhergehenden Ansprüche, **dadurch gekennzeichnet, dass** die Trommel (01) als rotierende Trommel (01) ausgebildet ist.

6. Vorrichtung nach einem der vorhergehenden Ansprüche, **dadurch gekennzeichnet, dass** die Trommel (01) in einer Druckmaschine angeordnet ist.

7. Vorrichtung nach einem der vorhergehenden Ansprüche, **dadurch gekennzeichnet, dass** die Sensoreinrichtung (03) als CCD-Kamera (3) ausgebildet ist.

8. Vorrichtung nach einem der vorhergehenden Ansprüche, **dadurch gekennzeichnet, dass** die Sensoreinrichtung (03) auf das Material (05) aufgedruckte Wertnoten kontrolliert.

9. Vorrichtung nach einem der vorhergehenden Ansprüche, **dadurch gekennzeichnet, dass** die Sensoreinrichtung (03) derart ausgebildet ist, dass das Material (05) ohne Relativbewegung zwischen Material (05) und Sensoreinrichtung (03) kontrolliert werden kann.

10. Vorrichtung nach einem der vorhergehenden Ansprüche, **dadurch gekennzeichnet, dass** sich die Beleuchtungseinrichtung (04) im wesentlichen über die gesamte Länge der Trommel (01) erstreckt.

11. Vorrichtung nach einem der vorhergehenden Ansprüche, **dadurch gekennzeichnet, dass** die Sensoreinrichtung (03) gekühlt ist.

12. Vorrichtung nach einem der vorhergehenden Ansprüche, **dadurch gekennzeichnet, dass** die Trommel (01) auf einer Stirnseite offen und auf der anderen Stirnseite geschlossen ausgebildet ist.

13. Vorrichtung nach Anspruch 10, **dadurch gekennzeichnet, dass** die Beleuchtungseinrichtung (04) in der Art einer Leuchtröhre (04) ausgebildet ist.

## Claims

1. A device for controlling material in sheet form (05), with a sensor device (03) and an illumination device (04), the material in sheet form (05) to be controlled being carried on a transparent cylinder (01), the illumination device (04) being arranged on one side of the cylinder (01) and the sensor device (03) on the other side of the cylinder (01), the material (05) having a print pattern to be controlled, with the cylinder (01) having a holding device (02) for the material in sheet form (05) to be controlled, **characterised in that** the cylinder (01) consists of transparent material and has a cutout for the holding device (02), with this holding device (02) continuously taking over the material (05) from a counterpressure cylinder (06) of a printing press and transferring it onto the cylinder (01).

2. A device according to claim 1, **characterised in that** the illumination device (04) is arranged within the periphery of the cylinder (01) and the corresponding sensor device (03) is arranged outside the periphery of the cylinder (01).

3. A device according to one of the preceding claims, **characterised in that** the illumination device (04) and the corresponding sensor device (03) have a fixed arrangement.

4. A device according to one of the preceding claims, **characterised in that** nearly the entire area of the material (05) lies on the transparent cylinder (01).

5. A device according to one of the preceding claims, **characterised in that** the cylinder (01) is designed as a rotating cylinder (01).

6. A device according to one of the preceding claims, **characterised in that** the cylinder (01) is arranged in a printing press.

7. A device according to one of the preceding claims, **characterised in that** the sensor device (03) is designed as a CCD camera (3).

8. A device according to one of the preceding claims, **characterised in that** the sensor device (03) controls bank notes printed on the material (05).

9. A device according to one of the preceding claims, **characterised in that** the sensor device (03) is designed in such a way that the material (05) can be controlled without relative movement between the material (05) and the sensor device (03).

10. A device according to one of the preceding claims, **characterised in that** the illumination device (04) essentially extends over the entire length of the cylinder (01).

11. A device according to one of the preceding claims, **characterised in that** the sensor device (03) is cooled.

12. A device according to one of the preceding claims, **characterised in that** the cylinder (01) is opened on one frontal face and closed on the other frontal face.

13. A device according to claim 10, **characterised in that** the illumination device (04) is designed in the form of a fluorescent tube.

## Revendications

1. Dispositif destiné à contrôler un matériau (05) en forme de feuille, comportant un dispositif de détection (03) et un dispositif d'éclairage (04), le matériau (05) en forme de feuille à contrôler étant guidé sur un tambour (01) transparent, le dispositif d'éclairage (04) étant disposé d'un côté du tambour (01) et le dispositif de détection (03) étant disposé de l'autre côté du tambour (01), le matériau (05) présentant une impression à contrôler, le tambour (01) comportant un dispositif de retenue (02) pour le matériau (05) en forme de feuille à contrôler, **caractérisé en ce que** le tambour (01) est réalisé dans un matériau transparent et comporte un évidement pour le dispositif de retenue (02), ce dispositif de retenue (02) recevant en continu le matériau (05) d'un cylindre de contre-pression (06) d'une machine d'impression et le transférant sur le tambour (01).

2. Dispositif selon la revendication 1, **caractérisé en ce que** le dispositif d'éclairage (04) est agencé à l'intérieur de la périphérie du tambour (01) et le dispositif de détection (03) associé est disposé à l'extérieur de la périphérie du tambour (01).

3. Dispositif selon l'une quelconque des revendications précédentes, **caractérisé en ce que** le dispositif d'éclairage (04) et le dispositif de détection (03) associé sont fixes.

4. Dispositif selon l'une quelconque des revendications précédentes, **caractérisé en ce que** le matériau (05) est appliqué à peu près sur la totalité de sa surface contre le tambour (01) transparent.

5. Dispositif selon l'une quelconque des revendications précédentes, **caractérisé en ce que** le tambour (01) est réalisé sous la forme d'un tambour (01) rotatif.

6. Dispositif selon l'une quelconque des revendications précédentes, **caractérisé en ce que** le tambour (01) est monté dans une machine d'impression.

7. Dispositif selon l'une quelconque des revendications précédentes, **caractérisé en ce que** le dispositif de détection (03) est réalisé sous la forme d'une caméra CCD (03).

8. Dispositif selon l'une quelconque des revendications précédentes, **caractérisé en ce que** le dispositif de détection (03) contrôle des papier-valeurs imprimés sur le matériau (05).

9. Dispositif selon l'une quelconque des revendications précédentes, **caractérisé en ce que** le dispositif de détection (03) est réalisé de telle sorte que le matériau (05) peut être contrôlé sans mouvement relatif entre le matériau (05) et le dispositif de détection (03).

10. Dispositif selon l'une quelconque des revendications précédentes, **caractérisé en ce que** le dispositif d'éclairage (04) s'étend sensiblement sur toute la longueur du tambour (01).

11. Dispositif selon l'une quelconque des revendications précédentes, **caractérisé en ce que** le dispositif de détection (03) est refroidi.

12. Dispositif selon l'une quelconque des revendications précédentes, **caractérisé en ce que** le tambour (01) est réalisé en étant ouvert sur un côté frontal et en étant fermé sur l'autre côté frontal.

13. Dispositif selon la revendication 10, **caractérisé en ce que** le dispositif d'éclairage (04) est réalisé sous la forme d'un tube fluorescent (04).
